Europäisches Patentamt

European Patent Office

Office européen des brevets

(11) Publication number: **0 079 742**
**B1**

(12) **EUROPEAN PATENT SPECIFICATION**

(45) Date of publication of patent specification: **21.12.88**

(21) Application number: **82305941.5**

(22) Date of filing: **08.11.82**

(51) Int. Cl.⁴: **H 01 M 2/26,** H 01 M 10/34,
H 01 M 10/04

(54) **Equalizing battery cell busbar.**

(30) Priority: **16.11.81 US 321514**

(43) Date of publication of application:
**25.05.83 Bulletin 83/21**

(45) Publication of the grant of the patent:
**21.12.88 Bulletin 88/51**

(84) Designated Contracting States:
**DE FR GB**

(56) References cited:
**FR-A-2 384 358**
**US-A-1 587 951**
**US-A-3 846 174**
**US-A-3 956 015**
**US-A-3 990 910**

(73) Proprietor: **Ford Aerospace & Communications**
**Corporation**
**3939 Fabian Way**
**Palo Alto, Cal. 94303 (US)**

(72) Inventor: **Meyer, Theodore Otto**
**935 Blazingwood Drive**
**Sunnyvale California 94086 (US)**
Inventor: **Van Ommering, Gerrit**
**266 Topaz Way**
**San Francisco California 94131 (US)**

(74) Representative: **Messulam, Alec Moses**
**A. Messulam & Co. 24 Broadway**
**Leigh on Sea Essex SS9 1BN (GB)**

The file contains technical information
submitted after the application was filed and
not included in this specification

Courier Press, Leamington Spa, England.

**Description**

This invention pertains to the field of battery cells, and in particular, metal-gas batteries, such as nickel hydrogen batteries.

A prior art search uncovered the following U.S. patent references:

U.S. patent 4,115,630 accomplishes one of the goals of the present invention, i.e., the equal ageing of electrode modules by means of equalisation of resistance among internal paths traversing all modules; however, this patent does not suggest how this goal can be accomplished with the further goal of locating both terminals at the same end of the cell. In fact, integral to the design of the '630 patent is the placement of each terminal along the cell's cylindrical axis, thereby precluding placement of both terminals at the same end.

U.S. patent 3,956,015 places both terminals on one side of the cell, although the terminals are perpendicular to the wall of the cell, unlike in the present invention. The '015 patent attempts to equalise the resistance within the cell for all module paths by means of utilising individual leads from the terminals to each electrode. The path resistances are not exactly equal, however, because there are always minor variations in sizing and connecting the leads. Furthermore, since the leads have to be insulated from each other, the resulting design is cumbersome, heavy, and unsuitable for spacecraft applications.

U.S. patents 3,899,351; 4,004,067; 4,004,068; 4,098,962; 4,127,703; 4,128,703; and 4,159,367 show battery cells with positive and negative terminals situated on the same end of the cell. However, none of the patents teaches the use of resistance balancing among module paths so as to prolong the life of the battery as in the present invention.

U.S. patent 3,846,174 shows resistance balancing within a module, but not from module to module.

According to the invention there is provided a battery cell comprising an electrode stack which includes at least two electrode modules, each module having at least one positive and one negative electrode, a positive busbar connecting each of said positive electrodes, a negative busbar connecting each of said negative electrodes, a conductive positive terminal electrically connected to said positive busbar and a conductive negative terminal electrically connected to said negative busbar, characterised in that said cell has two longitudinally opposite ends, said terminals protruding into said cell at the same end, one of the terminals is connected to one of said busbars at the end of the busbar adjacent the terminal, and the other of said busbars is formed of two bars of which the first bar connects like electrodes to one another and the second bar is an equalising bar connecting the other terminal to the first bar only at the end of the first bar remote from the terminal, the resistance increment between any two adjacent electrode modules along one of said busbars being substantially the same as the resistance increment between the same two adjacent electrode modules along the other of said busbars, and each module having substantially the same resistance between the two busbars.

In the battery cell of the present invention, two important goals are realised. First, both the negative and positive terminals enter the cell on the same end. This facilitates interconnections to the loads and keeps the conductor lengths short. This is very important in the case where weight and volume must be minimised, such as in a spacecraft application.

The second important feature is that the inner geometry of the battery cell of the present invention is such that the electrodes age equally. This is critical where one wishes to prolong the life of the battery cell while minimising weight, as in a spacecraft. This goal is accomplished by means of equalising the resistances along all paths internal to the cell corresponding to all electrode modules. Thus, each module contributes an equal amount of power to the overall capability of the battery and ages equally.

The difficulty of accomplishing both goals simultaneously is exemplified by the large number of patents cited above describing battery cells which are unable to do so.

The two-part busbar may be either the positive or the negative busbar.

Surprisingly, the equalising bar (so termed as it serves to equalise the resistance paths of all the electrode modules) of the two-part, or equalised, busbar does not have to have the same resistance per unit length or the same length as either the connecting bar of the equalised busbar or the other, non-equalised, busbar. The equalising bar need also not have the same resistance per unit length as the conductor connecting the other terminal to the other busbar. As a general rule, the equalising bar should be kept as short as possible to minimise resistance losses and weight.

A simple way to ensure equality of the resistance increment between any two adjacent electrode connections along each of the busbars is to make the connecting bar of the same length and the same resistance per unit length as the non-equalised busbar. The internal resistance from positive to negative busbars within all electrode modules must also be substantially the same.

The invention will now be described further, by way of example, with reference to the accompanying drawings, in which.

Figure 1 is a partly schematic, partly crosssectional side view of a battery cell utilising the present invention;

Figure 2 is an exploded perspective view of one embodiment of the two-part busbar of the present invention; and

Figure 3 is a side view of the embodiment illustrated in Figure 2.

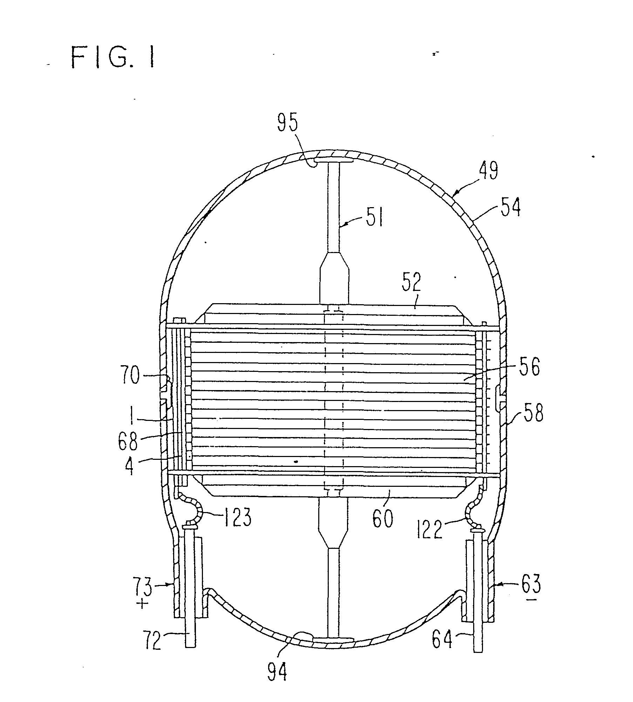

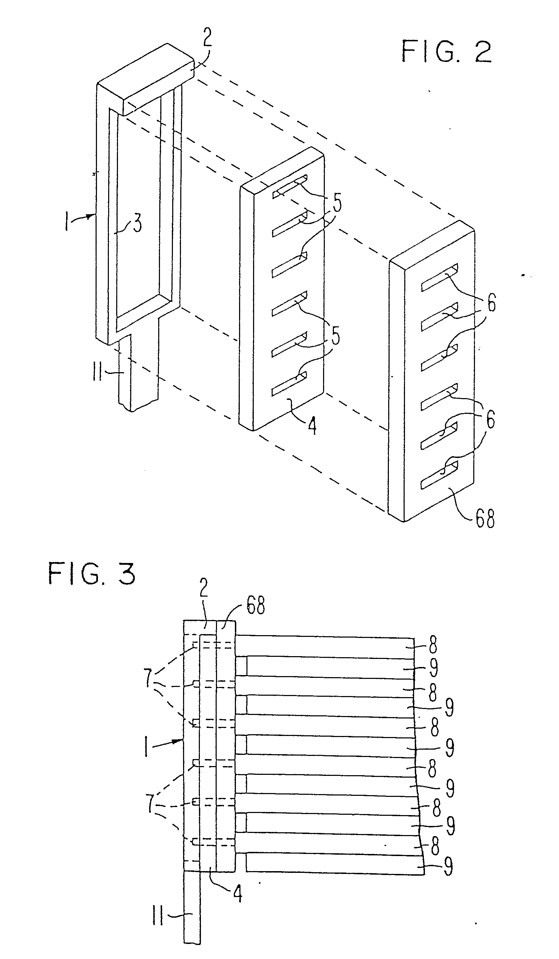

Figure 1 illustrates a type of battery, a pressurised metal-gas battery cell 49, where the present invention has particular applicability. A reactant gas such as hydrogen permeates the interior of vessel 54. Electrode stack 56, comprising at least two electrode modules, contains the second reactant. Each module typically comprises one positive electrode 8, connected to positive busbar 68 and 1 (see Fig. 3), and one negative electrode 9, connected to negative busbar 58. Positive and negative electrodes are alternately stacked to form electrode stack 56. Separators, not shown, provide insulation between the electrodes and contain an electrolyte. Different separators may be present between modules, to permit access of reactant gas or provide electrical insulation. In the case where hydrogen is the first reactant, the negative electrodes 9 can be, for example, nickel catalysed with platinum.

While the description herein is oriented around pressurised metal/gas cells as one example, the present invention can be advantageously utilised in any two-terminal battery cell having an electrode stack comprising at least two electrode modules, each module containing at least one positive and one negative electrode.

The shape of cell 49 is shown as an elongated right circular cylindrical sleeve terminating on each end by a portion of an ellipsoid. In the example, illustrated, each end is a half sphere. This is an optimum geometry for containing a high pressure gas.

Penetrating the same end of cell 49 are positive terminal 73 and negative terminal 63.

The electrode stack 56 is supported by an elongated, typically cylindrical centre rod 51 of insulating material which exerts axially outward pressure against the inside surface of vessel 54 via washers 95 and 94. Insulating end plates 52 and 60, in this case circularly shaped, compress the electrode stack 56 axially inwardly, and provide radial pressure outwardly against the interior of vessel 54. A weld ring 70 is used to facilitate welding two portions of the vessel 54 together during fabrication of the cell 49.

The terminal 63 contains therewithin a conductive feedthrough 64 electrically insulated from the vessel 54, which is normally a conductor, such as a thin steel. Similarly, the terminal 73 contains therewithin a conductive feedthrough 72 which is similarly electrically insulated from the vessel 54. Preferably, terminals 63 and 73 are substantially parallel to the longitudinal axis of the cell 49.

Feedthrough 64 is connected electrically to the negative busbar 58 by a flexible conductor 122. This terminal is illustrated as being the non-equalised terminal, although the negative terminal could just as readily be equalised, in which case terminal 73 would be the non-equalised terminal. Here, terminal 73 is shown as the equalised terminal. The feedthrough 72 is connected electrically to an equalising bar 1 by a flexible conductor 123. Equalising bar 1 is connected to connecting bar 68 at just one region, along stack 56 at that end remote from terminal 73. Thus, in the illustration, the connecting bar 68 and the equalising bar 1 together constitute the two-part positive busbar.

Equalising bar 1 is always connected to the connecting bar 68 at only one region, i.e., at that end of the electrode stack 56 opposite from the end of battery cell 49 through which terminals 73 and 63 protrude. The important consideration is that the equalising bar 1 should not touch the connecting bar 68 in the region alongside stack 56. The resistance increment between any two adjacent electrode connections along each of the positive and negative busbars must be the same.

The operation of the present invention and the means by which the resistances through all electrode module paths are equalised can be understood by examining TABLE I.

N is the resistance along the conductive path from the end of the non-equalised terminal (measured from the unconnected tip of feedthrough 72 or 64) to the nearest end of the non-equalised busbar. Thus, in the embodiment illustrated, N is the resistance from the unconnected tip of feedthrough 64 through conductor 122 to the point of negative busbar 58 alongside the bottom of stack 56.

M is the resistance through the path starting at that point of the equalised busbar alongside the top of stack 56 comprising equalising bar 1 plus the flexible conductor (123 or 122) plus the equalised feedthrough. Thus, here M is the resistance from the top of connecting 68 through equalising bar 1 to the unconnected tip of positive feedthrough 72.

L is the total resistance of each of the non-equalised busbar and the connecting bar of the equalised busbar in the region of stack 56. TABLE I shows the internal path resistances for three different electrode modules within electrode stack 56.

TABLE I

| Location of electrode module | Lowermost module | Uppermost module | Middle module |
|---|---|---|---|
| Path resistance through non-equalised terminal | N | N | N |
| Path resistance through non-equalised busbar | 0 | L | L/2 |
| Path resistance through equalised busbar | L | 0 | L/2 |
| Path resistance through equalised busbar and equalised terminal | M | M | M |

It can be seen from the above table that regardless of the location of the electrode module, the internal resistance within cell 49 along the path traversing said module is equal to $L+M+N+P$, where P is the resistance through each module. It can also be noted from the above that M is independent of L and N and thus does not have to be of any particular value. This means that the resistance of equalising bar 1 does not need to have any particular value. The length of equalising bar 1 is independent of the length of each of the connecting bar 68 and of the non-equalised busbar 58. The resistance per unit length of equalising bar 1 is also independent of the resistance per unit length of each of the connecting bar 68 and the non-equalised busbar 58. As a general rule, M should be kept as small as possible to minimise loss and equalising busbar 1 should be kept as lightweight as possible, especially for space applications.

The resistance increments between any two adjacent electrodes along each of the equalised and non-equalised busbars must be the same. A simple way to satisfy this condition is to provide the equalised and non-equalised busbars with the same length and the same resistance per unit length. Also, the internal resistances P within each electrode module from the positive busbar to the negative busbar should be as equal as possible.

None of busbars 1, 68 or 58 should touch the wall 54, to avoid electrochemical reactions taking place on the wall 54 which would adversely affect the power output of the cell 49.

Since the above are the only limitations on the invention it can be readily appreciated that there are many possible ways of embodying an equalising bar 1. For example, it could be implemented in the form of a conductor passing through the centre of the insulating centre rod 51 on its way to the equalised terminal. The embodiment illustrated is just one practical example and is seen in detail in Figures 2 and 3. Here, the equalising bar 1 has a lower portion 11 which is connected to the flexible conductor (123 or 122) and an elongated rectangular portion 3 cut out by means of a rectangular hole to permit the passage therethrough of tabs 7 without electrical contact being made between tabs 7 and bar 1. Each tab 7 is the termination of an electrode of the same polarity as the equalised busbar, in this case the positive electrodes 8. The function of each tab 7 is to provide a means for making electrical contact between each electrode 8 and the busbar.

Connecting bar 68 is shown as having the shape of an elongated rectangular bar with narrow rectangular slits disposed transverse to its long dimension. Slits 6 are dimensioned so as to accept tabs 7. Weld tabs may be pre-inserted in slits 6 to facilitate the welding of tabs 7 to connecting bar 68.

The equalising bar 1 has an upper ridge 2 which is welded, soldered, or otherwise conductively bonded to the top of the connecting bar 68. This is the only region at which equalising bar 1 and the connecting bar 68 make contact. Insulator 4, shown having an elongated rectangular shape, is disposed between the bars 1 and 68 to ensure that the bars 1 and 68 will not touch in the region of stack 56. Insulator 4 can be cut through with a series of thin rectangular slits 5 disposed transverse to its long axis for accepting and providing mechanical support for tabs 7.

4

## Claim

A battery cell comprising an electrode stack which includes at least two electrode modules, each module having at least one positive (8) and one negative (9) electrode, a positive busbar (68) connecting each of said positive electrodes (8), a negative busbar (58) connecting each of said negative electrodes (9), a conductive positive terminal (72) electrically connected to said positive busbar (68) and a conductive negative terminal (64) electrically connected to said negative busbar (58), characterised in that said cell (49) has two longitudinally opposite ends, said terminals (72, 64) protruding into said cell at the same end, one of the terminals (64) is connected to one of said busbars (58) at the end of the busbar (58) adjacent the terminal (64), and the other of said busbars is formed of two bars (1, 68) of which the first bar (68) connects like electrodes (8) to one another and the second bar (1) is an equalising bar connecting the other terminal (72) to the first bar (68) only at the end of the first bar (68) remote from the terminal (72), the resistance increment between any two adjacent electrode modules along one of said busbars (58) being substantially the same as the resistance increment between the same two adjacent electrode modules along the other of said busbars (68), and each module having substantially the same resistance between the two busbars (58, 68).

## Patentanspruch

Akkumulatorzelle mit einem mindestens zwei Elektrodenmodule enthaltenden Elektrodenstapel, wobei jedes Modul mindestens eine positive (8) und eine negative (9) Elektrode enthält, einer alle positiven Elektroden (8) verbindenden, positiven Sammelschiene (68), einer alle negativen Elektroden (9) verbindenden, negativen Sammelschiene (58), einem mit der positiven Sammelschiene (68) elektrisch verbundenen, leitfähigen, positiven Anschluß (72) und einem mit der negativen Sammelschiene (58) elektrisch verbundenen, leitfähigen, negativen Anschluß (64), dadurch gekennzeichnet, daß die Zelle (49) zwei in Längsrichtung entgegengesetzte Enden hat, daß die Anschlüsse (72,64) an demselben Ende in die Zelle ragen, daß einer der Anschlüsse (64) mit einer der Sammelschienen (58) an dem dem Anschluß (64) benachbarten Ende der Sammelschiene (58) verbunden ist, und daß die andere der Sammelschienen aus zwei Schienen (1, 68) gebildet ist, von denen die erste (68) gleiche Elektroden (8) miteinander verbindet und die zweite (1) eine Ausgleichschiene ist, die den anderen Anschluß (72) mit der ersten Schiene (68) nur an dem vom Anschluß (72) entfernten Ende der ersten Schiene (68) verbindet, wobei die Widerstandszunahme zwischen zwei beliebigen benachbarten Elektrodenmodulen längs einer der Sammelschienen (58) im wesentlichen die gleiche ist wie die Widerstandszunahme zwischen den beiden gleichen benachbarten Elektrodenmodulen längs der anderen der Sammelschienen (68) und jedes Modul im wesentlichen den gleichen Widerstand zwischen den beiden Sammelschienen (58,68) hat.

## Revendication

Elément de pile comprenant un empilement d'électrodes qui comporte au moins deux modules d'électrodes, chaque module comportant au moins une électrode positive (8) et une électrode négative (9), une barre collectrice positive (68) reliant chacune desdites électrodes positives (8), une barre collectrice négative (58) reliant chacune desdites électrodes négatives (9), une borne conductrice positive (72) reliée électriquement à ladite barre collectrice positive (68) et une borne conductrice négative (64) reliée électriquement à ladite barre collectrice négative (58), caractérisé en ce que ledit élément (49) présente deux extrémités longitudinalement opposées, lesdites bornes (72, 64) s'engageant à l'intérieur dudit élément à la même extrémité, et en ce que l'une des bornes (64) est reliée à l'une desdites barres collectrices (58) à l'extrémité de la barre collectrice (58) adjacente à la borne (64) tandis que l'autre barre collectrice est formée de deux barres (1, 68) dont la première (68) relie entre elles des électrodes (8) de même nom et dont la seconde (1) est une barre égalisatrice ne reliant l'autre borne (72) à la première barre (68) qu'à l'extrémité de la première barre (68) la plus éloignée de la borne (72), l'incrément de résistance entre deux modules d'électrodes adjacents quelconques le long de l'une desdites barres collectrices (58) étant sensiblement le même que l'incrément de résistance entre ces mêmes deux modules d'électrodes adjacents le long de l'autre barre collectrice (68), et chaque module présentant sensiblement la même résistance entre les deux barres collectrices (58, 68).

## FIG. 1

EP 0 079 742 B1

FIG. 2

FIG. 3